**Europäisches Patentamt**

**European Patent Office**

**Office européen des brevets**

(19)

(11) Numéro de publication: **0 138 666**
**B1**

(12) **FASCICULE DE BREVET EUROPÉEN**

(45) Date de publication du fascicule du brevet:
03.02.88

(51) Int. Cl.⁴: **G 21 C 19/40**

(21) Numéro de dépôt: **84401828.3**

(22) Date de dépôt: **14.09.84**

(54) **Dispositif de stockage d'éléments combustibles en piscine.**

(30) Priorité: **14.09.83 FR 8314621**

(43) Date de publication de la demande:
**24.04.85 Bulletin 85/17**

(45) Mention de la délivrance du brevet:
**03.02.88 Bulletin 88/5**

(84) Etats contractants désignés:
**BE CH DE FR GB IT LI SE**

(56) Documents cité:
**DE-A-2 730 850**
**FR-A-2 304 993**
**US-A-4 096 392**

(73) Titulaire: **Etablissements LEMER & CIE, Rue de la Fonderie Zone Industrielle Nantes/Carquefou, F-44477 Carquefou Cedex (FR)**

(72) Inventeur: **Kerjean, Joel Lemer & Cie, 13, Avenue du Golf, F-44800 Saint Herblain (FR)**

(74) Mandataire: **Mongrédien, André, c/o BREVATOME 25, rue de Ponthieu, F-75008 Paris (FR)**

LIBER, STOCKHOLM 1988

## Description

La présente invention concerne une amélioration apportée aux dispositifs de stockage d'éléments combustibles nucléaires en piscine.

Dans les centrales nucléaires, les éléments combustibles non utilisés dans les réacteurs sont stockés dans des dispositifs constitués par des alvéoles métalliques régulièrement répartis dans des piscines de stockage. A l'heure actuelle, les écartements entre les alvéoles sont assez importants car l'eau située entre les alvéoles joue seule le rôle de modérateur neutrophage.

Cependant, on cherche de plus en plus à accroître la capacité des piscines en réduisant les écartements entre alvéoles, en particulier pour permettre une plus grande souplesse vis-à-vis des délais de retraitement. Il en résulte une réduction de l'épaisseur des lames d'eau séparant les parois de deux alvéoles voisins. Il est donc nécessaire de compenser la perte due à cette réduction d'épaisseur de la lame d'eau : la solution la plus employée actuellement consiste à recouvrir les parois des alvéoles d'un produit neutrophage. Les produits les plus utilisés sont le bore et ses dérivés (boral, graphite boré, carbure de bore, ...) dont certains sont mis en oeuvre par projection de fines particules directement sur les parois extérieures de l'alvéole, l'adhérence imposée pouvant nécessiter une projection plasma avec utilisation de chrome et de nickel comme liant. Une autre solution connue consiste à supprimer la lame d'eau entre les alvéoles et à placer le produit neutrophage dans un logement étanche constitué par soudure périphérique des parois contiguës des alvéoles adjacents. La première solution est de mise en oeuvre onéreuse. La deuxième solution sans lame d'eau entre les alvéoles exclut l'utilisation de certains matériaux neutrophages technologiquement et économiquement intéressants.

La présente invention a justement pour objet d'éliminer ces inconvénients grâce à un dispositif de stockage d'éléments combustibles qui soit plus facile à réaliser en ce qui concerne le matériau de protection neutronique.

Selon la principale caractéristique du dispositif objet de l'invention, celui-ci, du genre de ceux dans lesquels lesdits éléments sont placés dans des alvéoles limités par des parois métalliques, chaque alvéole étant séparé des alvéoles adjacents par une lame d'eau et lesdites parois étant recouvertes sur leur surface extérieure par une couche de matériau neutrophage, cette couche étant constituée par une feuille de cadmium caractérisé par une épaisseur comprise entre 0,1 et 1 mm qui recouvre de manière continue la surface extérieure desdites parois métalliques suivant le pourtour de l'alvéole et en ce que cette feuille mince est maintenue et protégée par une tôle d'épaisseur comprise entre 0,5 et 1 mm, ladite feuille mince et ladite tôle mince s'étendant sur au moins une partie de l'alvéole et l'épaisseur de la lame d'eau séparant deux alvéoles adjacents étant comprise entre 40 et 60 mm.

Selon une autre caractéristique du dispositif objet de l'invention, l'épaisseur de la couche de cadmium est comprise de préférence entre 0,1 et 0,5 mm.

D'autres caractéristiques et avantages de l'invention ressortiront de la description qui va suivre, donnée à titre purement illustratif et nullement limitatif, en référence aux dessins annexés, dans lesquels:
- la figure 1 est une vue schématique en perspective de l'ensemble d'un dispositif de stockage d'éléments combustibles dans une piscine, et
- la figure 2 est une vue agrandie en perspective et partiellement en coupe de la partie supérieure d'un alvéole du dispositif de la figure 1.

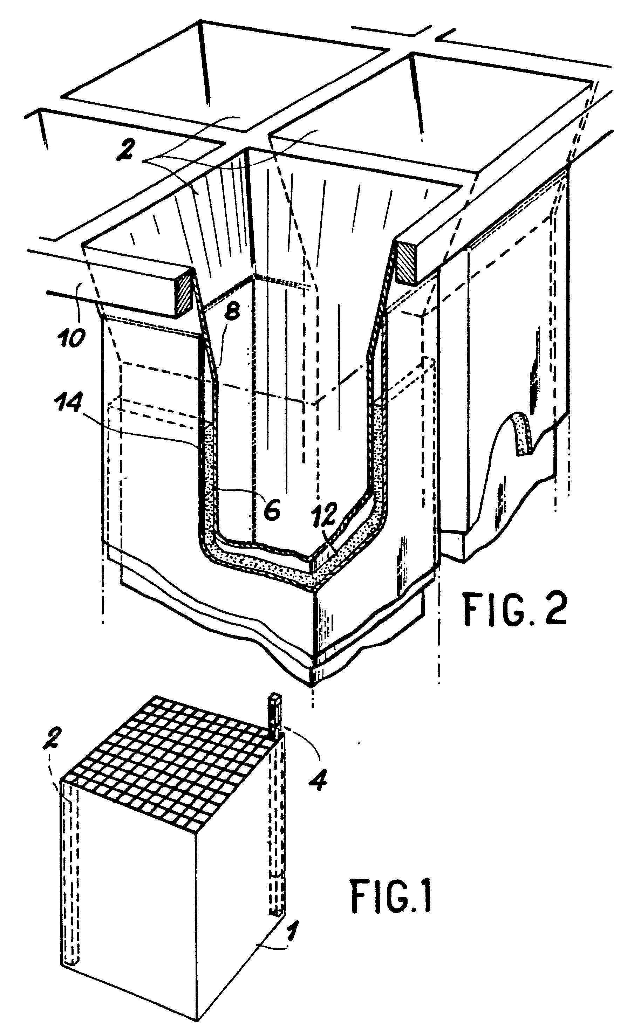

Si l'on se reporte à la figure 1, on voit un dispositif de stockage 1 qui se compose d'un grand nombre d'alvéoles 2 disposés verticalement et à l'intérieur desquels on introduit des assemblages combustibles 4. Le nombre d'alvéoles dans un dispositif tel que 1 est de l'ordre de 100 à 200 et il y a généralement plusieurs dispositifs de ce type dans une piscine, chacun reposant sur le fond de la piscine par l'intermédiaire d'un système de support (non représenté).

La figure 2 montre plus en détail la partie supérieure d'un alvéole tel que 2. Dans l'exemple représenté ici, les alvéoles sont de section carrée et sont limités par des tôles telles que 6, généralement en acier inoxydable. La partie supérieure 8 de chaque tôle 6 fait un angle avec le reste de la tôle afin que la section de l'alvéole soit plus grande à la partie supérieure du dispositif de stockage : ceci a pour but de faciliter l'introduction des assemblages dans les alvéoles. D'autre part, pour assurer une meilleure rigidité de l'ensemble, les alvéoles sont réunis à leur partie supérieure par des longerons 10 soudés sur les parties 8 des tôles 6.

Les alvéoles étant très rapprochés les uns des autres en vue d'accroître la capacité de stockage du dispositif, l'épaisseur de la lame d'eau entre deux alvéoles voisins est réduite à une valeur de l'ordre de 50 mm et il est nécessaire de revêtir les parois 6, sur leur surface extérieure, d'une couche continue de produit neutrophage 12 qui, dans le mode préféré de réalisation de l'invention, est constituée par une feuille mince de cadmium. Cette dernière est maintenue par une tôle mince 14, généralement en acier inoxydable, qui assure aussi sa protection contre la corrosion.

En effet, des essais pratiques ont montré que le cadmium présente, dans certaines configurations particulières, et notamment dans le cas où les alvéoles sont séparés par une lame d'eau d'épaisseur comprise entre 40 et 60 mm et de préférence entre 45 et 55 mm, d'excellentes propriétés neutrophages, même si l'épaisseur de la couche est faible, c'est-à-dire inférieure à 1 mm. Par exemple, pour un pas d'alvéole de 280 mm, les alvéoles ayant une section carrée de dimensions intérieures 225 x 225 mm, les tôles 6 une épaisseur de 2 mm, et les tôles 14 une épaisseur de 1 mm, une couche de cadmium de 0,5 mm d'épaisseur permet d'obtenir, avec une lame d'eau de 48 mm d'épaisseur, un facteur de multiplication Keff inférieur ou égal à 0,95 pour des assemblages combustibles ayant un enrichissement inférieur ou égal à 4,5 %.

Ainsi, le dispositif objet de l'invention présente des avantages particulièrement intéressants puisque le cadmium en feuille est plus facile à mettre en place de manière continue autour des alvéoles que les matériaux compacts de l'art antérieur. On arrive ainsi à réduire le coût de l'ensemble du dispositif de stockage tout en conservant les mêmes performances du point de vue de la protection neutronique.

**Revendications**

1. Dispositif de stockage d'éléments combustibles dans lequel les éléments (4) sont placés dans des alvéoles (2) limités par des parois métalliques (6), chaque alvéole (2) étant séparé des alvéoles adjacents par une lame d'eau et lesdites parois (6) étant recouvertes sur leur surface extérieure par une couche de matériau neutrophage (12), ladite couche (12) étant constituée par une feuille de cadmium caractérisé en ce que la dite feuille a une épaisseur comprise entre 0,1 et 1 mm et recouvre la surface extérieure desdites parois métalliques de manière continue suivant le pourtour de l'alvéole, cette feuille mince de cadmium étant maintenue et protégée par une tôle mince (14) d'épaisseur comprise entre 0,5 et 1 mm, ladite feuille mince et ladite tôle mince (14) s'étendant sur au moins une partie de la hauteur de l'alvéole (2) et l'épaisseur de la lame d'eau séparant deux alvéoles adjacents étant comprise entre 40 et 60 mm.

2. Dispositif selon la revendication 1, caractérisé en ce que l'épaisseur de la feuille de cadmium est comprise entre 0,1 et 0,5 mm.

3. Dispositif selon la revendication 1, caractérisé en ce que l'épaisseur de la lame d'eau est comprise entre 45 et 55 mm.

**Patentansprüche**

1. Vorrichtung zum Lagern von Brennelementen, in der die Elemente (4) in Zellen (2) angeordnet sind, die von Metallwänden (6) begrenzt sind, wobei jede Zelle (2) von den benachbarten Zellen durch eine Wasserschicht getrennt ist und die Wände (6) auf ihrer äußeren Oberfläche mit einer Schicht (12) aus einem neutroneneinfangenden Material bedeckt sind, wobei die genannte Schicht (12) von einem Blatt aus Cadmium gebildet ist, dadurch gekennzeichnet, daß das Blatt eine Dicke zwischen 0,1 und 1 mm aufweist und die äußere Oberfläche der genannten Metallwände dem Umriß der Zelle folgend durchgehend Überdeckt, wobei dieses dünne Blatt aus Cadmium von einem dünnen Blech (14) mit einer Dicke zwischen 0,5 und 1 mm aufrechtgehalten und geschützt ist, sich das genannte dünne Blatt und das genannte dünne Blech (14) über wenigstens einen Teil der Höhe der Zelle (2) erstrecken und die Dicke der Wasserschicht, die zwei benachbarte Zellen trennt, zwischen 40 und 60 mm beträgt.

2. Vorrichtung nach Anspruch 1, dadurch gekennzeichnet, daß die Dicke des Blatts aus Cadmium zwischen 0,1 und 0,5 mm beträgt.

3. Vorrichtung nach Anspruch 1, dadurch gekennzeichnet, daß die Dicke der Wasserschicht zwischen 45 und 55 m beträgt.

**Claims**

1. Apparatus for the storage of fuel elements in which the elements (4) are placed in racks (2) defined by metal walls (6), each rack (2) being separated from adjacent racks by a sheet of water, the outer surface of said walls (6) being covered by a layer of neutrophage material (12), said layer (12) being constituted by a thin cadmium sheet, characterized in that said sheet has a thickness between 0.1 and 1 mm and covers in a continuous manner, the outer surface of said metal walls following the circumference of the rack, said thin sheet being held in place and protected by a thin metal plate (14), said thin sheet and said thin metal plate (14) extending over at least part of the height of rack (2) and the thickness of the sheet of water separating two adjacent racks is between 40 and 60 mm.

2. Apparatus according to claim 1, characterized in that the thickness of the cadmium sheet is between 0.1 and 0.5 mm.

3. Apparatus according to claim 1, characterized in that the thickness of the sheet of water is between 45 and 55 mm.

FIG. 2

FIG.1